Europäisches Patentamt

European Patent Office

Office européen des brevets

(19)

(11) Numéro de publication: **0 080 414**
**B1**

(12) **FASCICULE DE BREVET EUROPEEN**

(45) Date de publication du fascicule du brevet:
**11.03.87**

(51) Int. Cl.⁴: **A 01 K 61/00**

(21) Numéro de dépôt: **82402112.5**

(22) Date de dépôt: **19.11.82**

(54) **Installation autonome d'élevage de poissons, et procédé d'accroissement de la densité volumique des poissons élevés en eau salée.**

(30) Priorité: **19.11.81 FR 8121671**

(43) Date de publication de la demande:
**01.06.83 Bulletin 83/22**

(45) Mention de la délivrance du brevet:
**11.03.87 Bulletin 87/11**

(84) Etats contractants désignés:
**BE DE FR GB IT NL SE**

(56) Documents cités:
**FR - A - 1 521 551**
**FR - A - 2 408 302**
**US - A - 3 691 994**

(73) Titulaire: **SOUS-TRAITANTS ARRONDISSEMENT DIEPPE S.T.A.D., 31 rue de la République B.P. 60, F-76202 Dieppe Cedex (FR)**

(72) Inventeur: **Bourdon, André Eugène Vincent, 65, rue Gambetta, F-76200 Dieppe (FR)**

(74) Mandataire: **Arnaud, Jean Pierre Alfred, Cabinet Arnaud 94 rue Saint-Lazare, F-75009 Paris (FR)**

ACTORUM AG

## Description

La présente invention concerne une installation autonome d'élevage de poissons, destinée à flotter à la surface de la mer, ainsi qu'un procédé d'accroissement de la densité volumique des poissons élevés industriellement en eau salée.

L'élevage d'animaux aquatiques ou marins, parfois appelé «aquaculture», est connu depuis fort longtemps. Il peut être réalisé de façon extensive ou intensive, dans des installations à terre, endiguées, submersibles ou non, à proximité des côtes ou en haute mer.

L'invention se rapporte uniquement à l'aquaculture en haute mer, et convient particulièrement bien à certaines espèces de poissons telles que les saumons et les truites. Pour cette raison, on décrit l'invention dans la suite du présent mémoire en référence à cette application, mais elle n'est pas limitée à celle-ci.

On considère d'abord deux types d'installations existantes, permettant de mieux comprendre les avantages de l'invention.

On connaît déjà l'aquaculture dans des sites protégés. Par exemple, on a déjà aménagé des atolls qui constituent une barrière protectrice naturelle, et on a fermé des fonds de fjords à l'aide de filets. On a aussi parfois utilisé des digues submersibles délimitant un volume d'élevage de poissons.

Un inconvénient de ce genre d'installation est dû à son confinement. En effet, l'eau n'est renouvelée que partiellement et est sujette à plusieurs processus de pollution. D'abord, les poissons élevés eux-mêmes provoquent une pollution locale du volume qui les contient. Cette situation est propice à l'extension des maladies, si bien que la densité des poissons élevés doit être limitée. Ensuite, le confinement relatif de l'eau réduit l'oxygénation si bien que la densité de poissons pouvant être élevés dans un volume donné est aussi limitée. Ainsi, ces installations sont sensibles non seulement à la pollution externe mais encore à leur propre pollution.

Compte tenu des inconvénients précités, on a essayé de pratiquer l'aquaculture en haute mer. On a utilisé à cet effet des cages flottantes ancrées au fond de la mer. Celles-ci ont un fonctionnement satisfaisant dans des sites protégés tels que des baies ou des anses. Cependant, elles ne peuvent pas résister aux conditions régnant en haute mer. Pour cette raison, elles ne peuvent être utilisées qu'avec des densités modérées de poissons, étant donné la pollution locale et les variations importantes de la température de l'eau à proximité de la terre.

Les brevets français n° 1 521 551 et 2 408 302 décrivent des cages submersibles. Celles-ci posent des problèmes importants d'accès. Elles présentent en outre l'inconvénient d'être fixées à demeure et d'être ainsi sensibles à la pollution externe de la mer.

L'invention concerne une installation d'élevage de poissons destinée à flotter habituellement à la surface de la mer et comprenant une ossature rigide destinée à flotter à la surface de la mer, et des dispositifs d'ancrage de l'ossature retenue au fond de la mer; selon l'invention, l'ossature a des dimensions telles qu'un cercle d'au moins 25 m environ de diamètre s'inscrit dans son périmètre en projection sur un plan horizontal; en outre, l'installation comprend des cages d'élevage solidaires de l'ossature et une superstructure comprenant des équipements communs qui confèrent à l'installation une exploitation et un fonctionnement autonomes.

Ainsi, une caractéristique essentielle de l'invention est la dimension importante de l'ossature de l'installation. Cette dimension minimale est fixée par les conditions de mer qui peuvent régner au large. Il est avantageux que cette dimension minimale soit d'au moins 40 m. Cette dimension importante implique donc que l'installation permette l'élevage de quantités de poissons extrêmement importantes.

Dans un mode de réalisation avantageux, l'ossature peut être ballastée afin qu'elle puisse flotter à différents niveaux, en fonction de la phase d'élevage des poissons.

Dans un mode de réalisation avantageux décrit en détail dans la suite du présent mémoire, l'installation comporte plusieurs ossatures flottantes rigides, reliées les unes aux autres afin qu'elles puissent flotter indépendamment les unes des autres. De cette manière, les différentes ossatures qui ont chacune une dimension minimale de 25 m, peuvent être séparées les unes des autres et remorquées indépendamment les unes des autres, par exemple dans le cas d'une pollution externe de la mer, nécessitant un transport de l'installation.

Il est en outre avantageux que l'installation comprenne une structure centrale portant des équipements communs, et plusieurs ossatures placées autour de la structure centrale de manière qu'elles puissent se déplacer en direction verticale indépendamment les unes des autres. La structure centrale comporte par exemple un fût articulé posé au fond de la mer, si bien que cette structure centrale ne flotte pas, contrairement aux ossatures qui lui sont reliées. Dans une variante, elle est elle-même flottante et ancrée au fond.

Dans un exemple d'installation, une structure centrale comportant un fût est entourée par six modules ayant chacun une ossature hexagonale.

L'invention concerne aussi un procédé d'élevage industriel de poissons en eau salée dans une installation d'élevage telle que définie ci-dessus, comprenant l'ancrage de l'ossature flottante en haute mer, à un emplacement où existent des courants et où les variations de température de l'eau sont faibles, et l'introduction de poissons dans les cages avec une densité volumique au moins égale au double de celle qui est normalement utilisée pour la même espèce de poissons dans les élevages industriels en eau salée effectués près des côtes et dans des sites protégés.

Les poissons peuvent être avantageusement des saumons ou des truites. La densité des poissons élevés dans les cages peut atteindre avanta-

geusement 30 kg/m$^3$, soit une valeur de l'ordre de 3 à 10 fois la densité normalement utilisée dans les élevages industriels.

L'installation et le procédé selon l'invention présentent des avantages très importants par rapport aux installations et procédés connus.

D'abord, la disposition de l'installation en haute mer, dans une région dans laquelle existent des courants, assure un renouvellement continu de l'eau si bien que l'élevage ne pose plus aucun problème de pollution locale. Le phénomène d'auto-empoisonnement des poissons disparaît complètement. Les courants renouvellent sans cesse l'oxygène dont l'épuisement ne limite plus la densité des poissons. Les deux conditions qui limitent normalement la densité volumique des poissons dans les installations d'aquaculture disparaissant ainsi, cette densité peut être accrue.

Comme en outre l'installation a une très grande dimension, le tonnage traité annuellement est extrêmement important. De plus, comme l'installation est disposée à un emplacement auquel les courants renouvellent constamment l'eau, la mer constitue un volant thermique pour l'installation, la température variant très peu. Au contraire, dans les installations formées dans des anses ou dans des baies, les températures de l'eau varient de façon non négligeable d'un jour à l'autre et même au cours d'une journée. Etant donné que les poissons sont en général plus sensibles aux variations de température qu'à la température elle-même, l'installation et le procédé selon l'invention présentent un avantage supplémentaire très important pour l'état sanitaire des poissons élevés.

Pour toutes les raisons indiquées, la mortalité et les maladies des poissons élevés selon l'invention sont extrêmement faibles. Ce comportement est dû à l'absence de pollution, à l'amélioration de l'oxygénation, aux très faibles variations de température et éventuellement à la température relativement basse de l'eau.

Tous les avantages précités permettent l'utilisation de l'installation pendant toute l'année, contrairement aux installations connues dont le fonctionnement ne dépasse pas en général sept mois par an. En conséquence, la rentabilité d'une installation selon l'invention est très importante, comparée à celle des installations connues. En effet, non seulement l'installation a une très grande dimension et traite donc un très grand nombre de poissons, mais encore elle permet l'utilisation d'une très grande densité de poissons, ayant un bon état sanitaire et pendant toute l'année.

D'autres caractéristiques et avantages de l'invention ressortiront mieux de la description qui va suivre, faite en référence aux dessins annexés sur lesquels:

la figure 1 est une perspective d'une installation modulaire d'élevage de poissons selon l'invention, représentée sans ses dispositifs d'ancrage; et

la figure 2 est une élévation latérale schématique représentant deux modules et la structure centrale de l'installation de la figure 1.

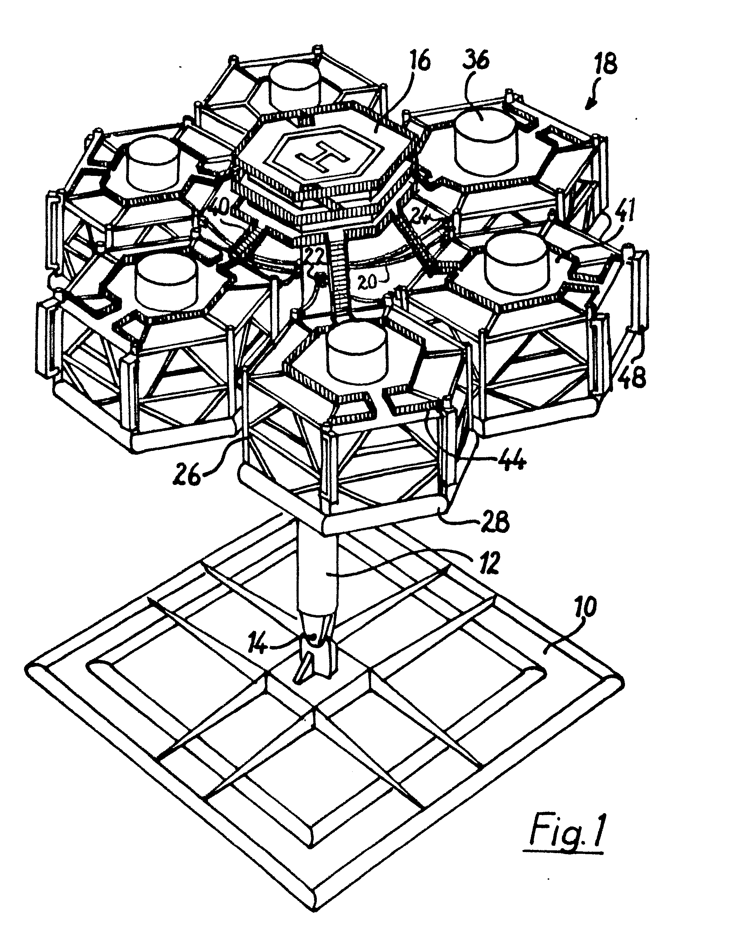

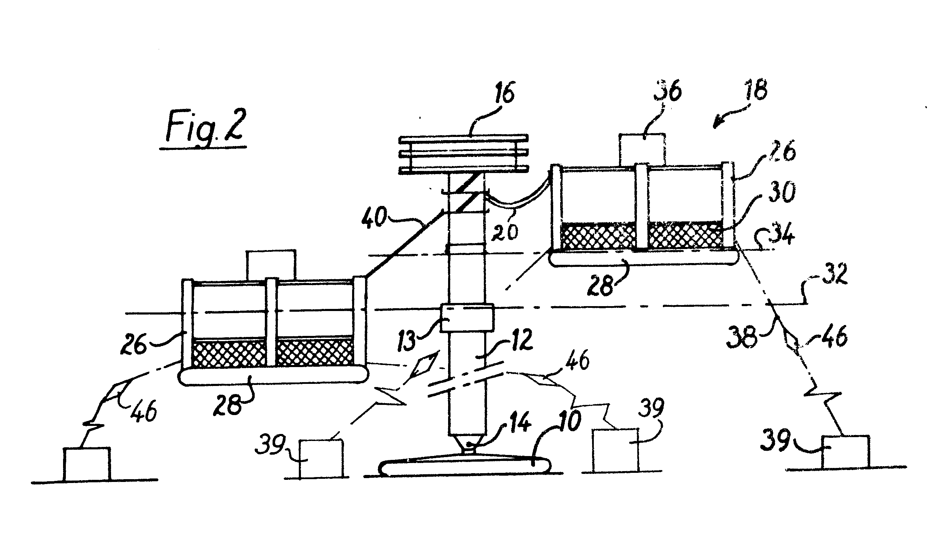

La figure 1 représente en perspective schématique une installation selon l'invention dont toute la partie inférieure est normalement immergée. Plus précisément, un socle 10 comprenant un bâti armé porte un fût 12 qui est articulé autour d'une rotule 14. Comme l'indique la figure 2, le fût 12 dépasse très largement au-dessus de la surface de l'eau, les limites inférieure et supérieure de celle-ci étant repérées par les références 32 et 34. Le fût 12 porte un flotteur 13 qui le maintient normalement vertical, tout en lui donnant certaines possibilités d'inclinaison. Le fût 12 porte, à sa partie supérieure, une superstructure 16 avec des équipements communs comprenant des bâtiments, des salles de machines, éventuellement une plate-forme d'atterrisage d'hélicoptère, etc. L'ensemble constitué par le socle 10, le fût 12 et les équipements communs forme une structure centrale qui ne flotte pas car le flotteur est simplement destiné à maintenir cette structure centrale en position verticale. En fait, le poids de cette structure est reporté au fond de la mer, sur le socle 10.

Plusieurs modules hexagonaux 18 sont disposés autour de la structure centrale. Ils sont reliés à celle-ci par des canalisations 20 fixées à des organes 22 et 24 de raccordement placés sur la structure centrale et sur les modules et transmettant l'énergie et les fluides nécessaires aux modules, et par des passerelles 40 décrites dans la suite.

Chaque module 18 comporte une ossature 26 qui est très rigide et dont les dimensions minimales sont de 25 m. Dans le mode de réalisation représenté, la distance séparant deux côtés parallèles de la structure hexagonale est égale à 40 m. Il s'agit donc de modules de très grande dimension. Ils flottent car ils comportent, à leur base, des volumes 28 qui font partie de l'ossature et qui peuvent être remplis d'eau ou d'air, selon une technique bien connue de ballastage. De cette manière, les cages 30 représentées sur la figure 2 peuvent être soit totalement immergées, comme indiqué pour le module de gauche sur la figure 2, soit presque totalement émergées, comme indiqué pour le module de droite sur la figure 2.

On a représenté, sur chaque module, une structure centrale 36, pouvant comprendre divers appareillages propres aux modules. Cependant, il est avantageux, dans l'installation considérée, que la plus grande partie des appareillages communs soit disposée dans la superstructure 16 portée par le fût 12.

Une autre caractéristique importante de l'invention est l'ancrage des modules. Ceux-ci sont pratiquement indépendants du fût central et il faut donc que trois ancrages au moins les retiennent dans trois directions différentes. A cet effet, ils sont retenus par des amarres ou des chaînes 38, fixées à des corps morts 39 placés au fond de la mer. Un coffre immergé 46 fixé à chaque amarre assure l'antipilonnement et tend celle-ci malgré les variations de hauteur du module. Les amarres, corps morts et coffres ne sont pas représentés sur la figure 1.

Le montage des différents modules est avantageusement complété par des amarres empêchant un éloignement excessif des modules adjacents, et d'autre part par des butées empêchant le choc des modules les uns contre les autres et contre le fût central.

Tout un système de passerelles 40 donne accès aux différentes plate-formes des modules telles que 41. Bien entendu, des systèmes permettant le roulement ou l'allongement et le rétrécissment des passerelles 40 lorsque les modules s'élèvent et s'abaissent, de manière connue.

Selon une caractéristique avantageuse, des plate-formes 44 sont formées le long d'un côté de chaque module, à un endroit où des butoirs 48 permettent l'accostage des navires.

La mise en place de l'installation comprend d'abord le remorquage de la structure centrale alors qu'elle flotte, puis la pose du socle 10 et du fût 12, et le maintien de celui-ci par des amarres. Les corps morts 39 sont aussi mis en place initialement. Ensuite, les différents modules 18 sont remorqués vers la structure centrale et y sont raccordés. Il sont alors ancrés aux corps morts. Les pompes placées sur chaque module aspirent ou chassent l'eau afin que les modules flottent au niveau voulu.

Les poissons élevés sont avantageusement des saumons ou des truites. Dans un exemple, au début de chaque cycle, des juvéniles sont placés dans les cages et ils grossissent pendant une période de 10 à 12 mois. Ils sont ensuite retirés en totalité ou en partie afin d'être commercialisés, selon le type particulier d'exploitation. Ainsi, les poissons d'une cage particulière peuvent être retirés et vendus en totalité. Dans une variante, une partie seulement des poissons est retirée périodiquement. Dans une autre variante, le prélèvement est progressif afin que la densité volumique des poissons soit optimale. L'installation comporte avantageusement des aspirateurs de type connu permettant une évacuation très commode des poissons. Cette évacuation peut aussi être facilitée par disposition du module à la hauteur la plus commode par rapport au niveau de la mer.

Si l'endroit d'implantation de l'installation se trouve pollué extérieurement, par exemple par déversement de pétrole, les modules peuvent être détachés et remorqués en lieu sûr.

Un avantage important de l'installation selon l'invention est qu'elle est autonome. Ainsi, les équipements communs de la superstructure 16 comprennent les locaux d'habitation, le laboratoire, les sources d'énergie (génératrice électrique), les appareils de contrôle, etc... nécessaires à une exploitation autonome. Le fût 12 peut constituer un réservoir central de grande capacité pour la nourriture des poissons des différents modules.

Bien qu'on ait décrit une installation comprenant une structure centrale non flottante et plusieurs modules, cette disposition n'est pas indispensable. Par exemple, la structure centrale peut aussi être flottante. Dans un autre mode de réalisation, l'installation peut être simplement sous forme d'une structure flottante autonome ayant les fonctions de la structure centrale et d'un ou plusieurs modules. Dans une variante, des ossatures flottantes munies de cages peuvent être raccordées à une structure existante, telle qu'une plate-forme de forage pétrolier au large.

Ainsi, les installations selon l'invention présentent tous les avantages des installations de très grande taille qui permettent une réduction des prix de production par l'importance de leur production. Elles possèdent cependant les avantages dus à leur mobilité à la fois en direction verticale (flottaison) et en direction horizontale (remorquage éventuel).

**Revendications**

1. Installation d'élevage de poissons destinée à flotter habituellement à la surface de la mer et comprenant une ossature rigide (26) destinée à flotter à la surface de la mer, et des dispositifs (38, 39, 46) d'ancrage de l'ossature (26) retenue au fond de la mer, caractérisée en ce que l'ossature (26) a des dimensions telles qu'un cercle d'au moins 25 m environ de diamètre s'inscrit dans son périmètre en projection sur un plan horizontal, et en ce que l'installation comprend des cages (30) d'élevage solidaires de l'ossature et une superstructure (16) comprenant des équipements communs qui confèrent à l'installation une exploitation et un fonctionnement autonomes.

2. Installation selon la revendication 1, caractérisée en ce que l'ossature (26) est ballastable afin qu'elle puisse flotter à différents niveaux.

3. Installation selon l'une des revendications 1 et 2, caractérisée en ce qu'elle comprend plusieurs ossatures rigides flottantes (26) voisines les unes des autres.

4. Installation selon la revendication 3, caractérisée en ce que les différentes ossatures (26) peuvent être séparées les unes des autres afin qu'elles puissent être remorquées indépendamment les unes des autres.

5. Installation selon l'une des revendications 3 et 4, caractérisée en ce qu'elle comporte en outre une structure centrale (10, 12, 16) à laquelle les ossatures (26) sont reliées de manière qu'elles puissent se déplacer en direction verticale par rapport à la structure centrale.

6. Installation selon la revendication 5, caractérisée en ce que la structure centrale comporte un fût (12) posé au fond de la mer.

7. Installation selon la revendication 5, caractérisée en ce que la structure centrale est destinée à flotter et à être ancrée au fond de la mer.

8. Procédé d'élevage industriel de poissons en eau salée dans une installation d'élevage selon la revendication 1, caractérisé par l'ancrage de l'ossature flottante (26) en haute mer, à un emplacement où existent des courants et où les variations de température de l'eau sont faibles, et par l'introduction de poissons dans les cages (30), avec une densité volumique au moins égale au double de celle qui est normalement utilisée pour la même espèce de poissons dans les élevages industriels en eau salée effectués prés des côtes et dans des sites protégés.

9. Procédé selon la revendication 8, caractérisé en ce que les poissons élevés sont choisis parmi les saumons et les truites.

10. Procédé selon l'une des revendications 8 et 9, caractérisé en ce que la densité des poissons élevés dans les cages (30) est de l'ordre de 30 kg/m³.

## Claims

1. Equipment for breeding fish, said equipment being provided for usually floating at the sea surface, including a rigid frame (26) for floating at the sea surface, and anchor means (38, 39, 46) for anchoring said frame (26) at the sea bottom, characterized in that said frame (26) has such dimensions as a circle having a diameter of at least about 25 m is inscribed in its perimeter in projection on an horizontal plane, and in that the equipment includes breeding cages (30) fixed to said frame and a superstructure (16) including common facilities giving to said equipment autonomous exploitation and operation capacity.

2. Equipment according to claim 1, characterized in that said frame (26) can be ballasted for floating at various levels.

3. Equipment according to claim 1 or 2, characterized in that it includes several rigid floating frames (26) next to each other.

4. Equipment according to claim 3, characterized in that the different frames (26) can be separated one from the others to be independently towed.

5. Equipment according to claim 3 or 4, characterized in that it further includes a central structure (10, 12, 16) to which frames (26) are connected in such a manner to be vertically movable with respect to said central structure.

6. Equipment according to claim 5, characterized in that said central structure includes a shaft (12) sitted on the sea bottom.

7. Equipment according to claim 5, characterized in that said central structure is provided for floating and for being anchored to the sea bottom.

8. Process for industrial fish breeding in salted water in a breeding equipment according to claim 1, characterized by anchoring said floating frame (26) at an offshore location where streams are present and where temperature variations of water are small, and introducing fish into said cages (30) with a volume density at least equal to twice the density normally used for the same fish species in industrial breeding equipments in salted water, located near shores and in protected sites.

9. Process according to claim 8, characterized in that breeded fishes are selected from salmonds and trouts.

10. Process according to claim 8 or 9, characterized in that the density of fishes breeded in said cages (30) is of about 30 kg/m³.

## Patentansprüche

1. Fischzuchtanlage, die gewöhnlich auf der Oberfläche des Meeres schwimmt, enthaltend ein auf der Oberfläche des Meeres schwimmendes starres Gerüst (26) sowie Einrichtungen (38, 39, 46) zur Verankerung des Gerüstes (26) am Meeresboden, dadurch gekennzeichnet, dass das Gerüst (26) solche Abmessungen besitzt, dass ein dem Umfang des Gerüstes in Projektion auf eine horizontale Ebene einbeschriebener Kreis einen Durchmesser von wenigstens ca. 25 m besitzt und dass die Anlage Zuchtkäfige (30) besitzt, die fest mit dem Gerüst verbunden sind, ferner einen Oberbau (16), der gemeinsame Einrichtungen enthält, die der Anlage einen autonomen Betrieb und eine autonome Funktion ermöglichen.

2. Anlage nach Anspruch 1, dadurch gekennzeichnet, dass das Gerüst (26) mit Ballast versehen werden kann, so dass es auf unterschiedlichem Niveau schwimmen kann.

3. Anlage nach einem der Ansprüche 1 und 2, dadurch gekennzeichnet, dass sie mehrere einander benachbarte, starre, schwimmende Gerüste (26) enthält.

4. Anlage nach Anspruch 3, dadurch gekennzeichnet, dass die einzelnen Gerüste (26) voneinander trennbar sind, so dass sie unabhängig voneinander geschleppt werden können.

5. Anlage nach einem der Ansprüche 3 und 4, dadurch gekennzeichnet, dass ausserdem eine zentrale Struktur (10, 12, 16) vorgesehen ist, mit der die Gerüste (26) derart verbunden sind, dass sie sich in vertikaler Richtung gegenüber der zentralen Struktur bewegen können.

6. Anlage nach Anspruch 5, dadurch gekennzeichnet, dass die zentrale Struktur einen Schaft (12) enthält, der sich auf dem Meeresboden abstützt.

7. Anlage nach Anspruch 5, dadurch gekennzeichnet, dass die zentrale Struktur als schwimmender und am Meeresboden verankerter Teil ausgebildet ist.

8. Verfahren zur industriellen Fischzucht im Salzwasser in einer Fischzuchtanlage gemäss Anspruch 1, dadurch gekennzeichnet, dass das schwimmende Gerüst (26) auf hoher See an einer Stelle verankert wird, wo Strömungen vorhanden sind und wo die Änderungen der Wassertemperatur gering sind, und dass in die Käfige (30) Fische in einer Volumendichte eingesetzt werden, die wenigstens gleich dem Doppelten der Volumendichte ist, die üblicherweise für dieselbe Fischart bei der industriellen Aufzucht im Salzwasser nahe der Küste und in geschützten Gewässern verwendet wird.

9. Verfahren nach Anspruch 8, dadurch gekennzeichnet, dass Lachse und Forellen als Zuchtfische Verwendung finden.

10. Verfahren nach einem der Ansprüche 8 und 9, dadurch gekennzeichnet, dass die Dichte der Zuchtfische in den Käfigen (30) in der Grössenordnung von 30 kg/m³ liegt.

_Fig.1_

0 080 414

Fig.2